# EUROPEAN PATENT APPLICATION

(11) **EP 1 890 174 A1**
(43) Date of publication of application: **20.02.2008**
(21) Application number: 07010443.5
(22) Date of filing: 25.05.2007
(51) Int. Cl.: G02B 6/44

(54) **Multicable clamp**

(30) Priority: 14.08.2006 US 503645
(71) Applicant: Furukawa Electric North America Inc. (a Delaware Corporation), Norcross GA 30071 (US)
(72) Inventor: George, John, Cumming, Georgia 30041 (US); Hendrikson, Daniel, Rowell, Georgia 30076 (US); Zhang, Hongbo, Duluth, Georgia 30097 (US)
(74) Representative: Schoppe, Fritz

(57) **Abstract**

Embodiments of the invention include a closure apparatus for clamping a transmission cable, such as an optical fiber transmission cable, and one or more tether cables. The closure apparatus includes a first member and a second member, each with a first partially cylindrical segment that fits around at least a portion of the transmission cable and at least one second partially cylindrical segment that fits around at least a portion of a corresponding tether cable. The first and second members are configured in such a manner that, when the first and second members are operably joined together, they form a closure around the transmission cable and the at least one tether cable, in such a way that the transmission cable and the at least one tether cable are substantially parallel and co-planar with one another.

## Description

### BACKGROUND OF THE INVENTION

### Field of Invention

The invention relates to cable clamps. More particularly, the invention relates to clamps for multiple cable arrangements, including transmission cables and tether support cables.

### Description of Related Art

One of the most important recent developments in the field of fiber optic communications is the emergence of the feasibility of fiber management and distribution systems, arrangements and devices for delivering optical fiber signals to a particular location or group of locations. Such applications typically are referred to as Fiber to the x (FTTx) applications. One of the more popular FTTx applications is Fiber to the Premises (FTTP) or Fiber To The Home (FTTH), in which optical signal capabilities are routed from a central office or other distribution location to a plurality of homes in that particular location via optical fiber and one or more optical connectors and/or other optical connection devices.

The emergence of FTTx applications is driving a need for closures at various access points along the last several portions of the fiber distribution. Conventional fiber closures typically involve molding, pouring or otherwise forming a resin or other suitable material around the fiber at the desired access point or points. However, conventional overmolded closures typically do not allow for relatively easy and repeatable access to the fiber and any tether support cables at the particular access point. Such access often is needed, e.g., in the event of a fiber failure and subsequent fiber splice or other repair at the access point. Accordingly, it would be desirable to have available an improved fiber clamp or closure for multiple fibers and/or tether cables.

### SUMMARY OF THE INVENTION

The invention is embodied in a closure apparatus for clamping multiple cables including a transmission cable, such as an optical fiber transmission cable, and one or more tether cables. The closure apparatus includes a first member and a second member, each with a first partially cylindrical segment that fits around at least a portion of the transmission cable and at least one second partially cylindrical segment that fits around at least a portion of a corresponding tether cable. The first and second members are configured in such a manner that, when the first and second members are operably joined together, they form a closure around the transmission cable and the at least one tether cable in such a way that the transmission cable and the at least one tether cable are substantially parallel and co-planar with one another.

### BRIEF DESCRIPTION OF THE DRAWINGS

FIG. 1 is a simplified, perspective view of a closure apparatus according to an embodiment of the invention, showing its use with a transmission cable and a pair of tether cables;

FIG. 2 is a simplified, perspective view of the first and second members of a closure apparatus according to an embodiment of the invention; and

FIG. 3 is a simplified, perspective view of the first and second members of FIG. 2, shown them being joined together to formed a closure apparatus according to an embodiment of the invention.

### DETAILED DESCRIPTION OF EXEMPLARY EMBODIMENTS

In the following description like reference numerals indicate like components to enhance the understanding of the invention through the description of the drawings. Also, although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

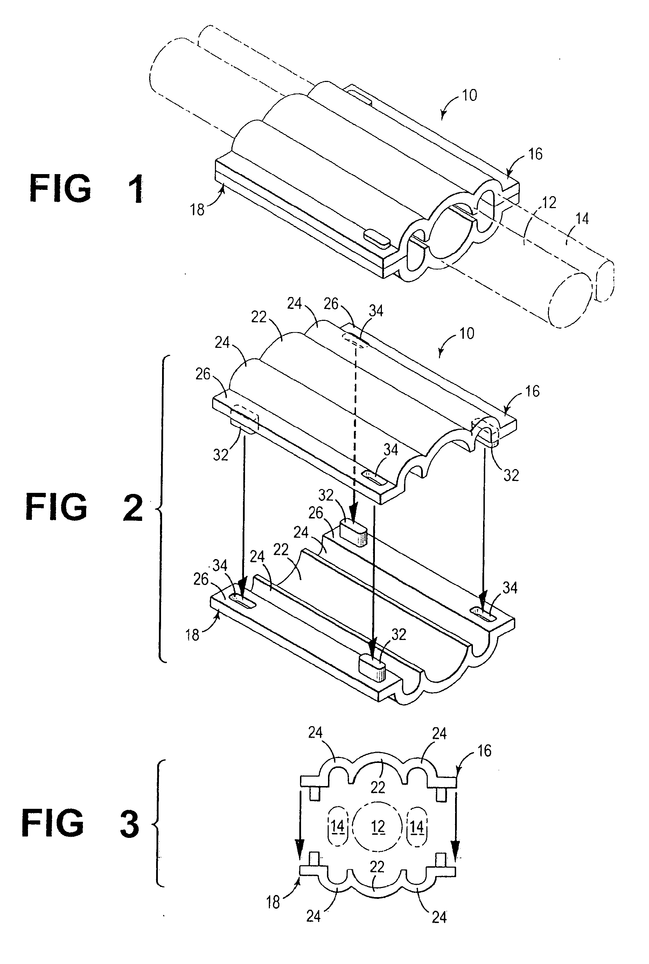

Referring now to FIG. 1, shown is a simplified, perspective view of a closure apparatus 10 according to an embodiment of the invention. The closure apparatus 10 is shown, in operation, clamped around a portion of a transmission cable 12, such as an optical fiber transmission cable, and around a tether cable 14. As will be discussed in greater detail hereinbelow, the closure apparatus 10 is capable of clamping around at least one other tether cable (not shown).

Referring now to FIG. 2 and FIG. 3, with continuing reference to FIG. 1, shown are other perspective views of the closure apparatus 10 according to an embodiment of the invention. The closure apparatus 10 includes a first member 16 and a second member 18. Each of the first member 16 and the second member 18 includes a first partially cylindrical segment 22 and at least one second partially cylindrical segment 24. Each of the first member 16 and the second member 18 also includes at least one flanged surface 26. The flanged surface 26 includes one or more keying features, as will be discussed in greater detail hereinbelow.

The first partially cylindrical segment 22 is dimensioned and configured to receive or fit at least partially around the transmission cable 12, which, as discussed hereinabove, can be an optical fiber transmission cable. Similarly, the second partially cylindrical segments 24, which typically are formed on either side of the first partially cylindrical segment 22, are each dimensioned and configured to receive or fit at least partially around the tether cable 14, such as any suitable tether cable used to provide support for an optical fiber transmission cable. Although only two second partially cylindrical segments 24 are shown, it should be understood that any suitable number of second partially cylindrical segments 24 can be included as part of each of the first member 16 and the second member 18.

As shown, with each of the first member 16 and the second member 18, the first partially cylindrical segment 22 and the one or more second partially cylindrical segments 24 are formed alongside one another and generally are parallel and co-planar with one another. That is, the longitudinal axis of the first partially cylindrical segment 22 and the longitudinal axes of the second partially cylindrical segments 24 are substantially parallel and co-planar. Therefore, when the transmission cable 12 is operably positioned or received within the first partially cylindrical segment 22 and one or more tether cables 14 are operably positioned or received within a respective second partially cylindrical segment 24, the transmission cable 12 and the tether cables 14 are substantially parallel and co-planar with respect to one another.

The first member 16 and the second member 18 are configured in such a way that, when the first member 16 and the second member 18 are operably joined together, the first member 16 and the second member 18 form a closure that will fit around the transmission cable 12 and at least one tether cable 14. The first member 16 and the second member 18 typically are operably joined together by contacting or pressing together the flanged surfaces 26 of the first member 16 with the corresponding flanged surfaces 26 of the second member 18, as shown generally in FIG. 1 and FIG. 3.

As discussed hereinabove, the flanged surfaces 26 of the first member 16 and the flanged surfaces 26 of the second member 18 each can contain one or more keying features, such as a key protruding from the flanged surface 26 or a keyway formed in the flanged surface 26. For example, as shown in the FIG. 2, the flanged surfaces 26 of the first member 16 each have a key 32 or other suitable keying feature protruding from one side of their respective flanged surface 26 in such a manner that the keys 32 are disposed at opposing corners of the first member 16. Similarly, the flanged surfaces 26 of the first member 16 each have a keyway 34 or other suitable keying feature formed in the other side of their respective flanged surface 26 in such a manner that the keyways 34 likewise are disposed at opposing corners of the first member 16.

In this manner, if the second member 18 is configured similarly to the first member in the above-described example, each key 32 from each of the first member 16 and the second member 18 will mate with a corresponding keyway 34 from the other member when the flanged surfaces 26 of the first member 16 and the second member 18 are joined together, regardless of which flanged surface 26 of the first member 16 is joined with which flanged surface 26 of the second member 18. Because the keys 32 and the keyways 34 are disposed at opposing corners of each of the first member 16 and the second member 18, each of the first member 16 and the second member 18 are identically keyed regardless of which way the respective member is oriented, i.e., which flanged surface 26 is above or below the other flanged surface 26.

Typically, each of the first member 16 and the second member 18 are configured similarly, although such is not necessary. However, as just discussed, when the first member 16 and the second member 18 are configured similarly, the first member 16 and the second member 18 can be operably joined regardless of the orientation of either the first member 16 or the second member 18. Moreover, having the same configuration for both the first member 16 and the second member 18 greatly simplifies the manufacturing process of the closure apparatus members.

Each of the first member 16 and the second member 18 are made of any one or more suitable materials that can provide a sufficiently firm closure apparatus around the transmission cable 12 and one or more of the tether cables 14. For example, each of the first member 16 and the second member 18 can be made from one or more of the following materials: polymer-based materials, such as polycarbonate or nylon, and metal-based materials, such as die cast aluminum, precision formed aluminum, stamped aluminum, or stainless steel.

It will be apparent to those skilled in the art that many changes and substitutions can be made to the embodiments of the invention herein described without departing from the spirit and scope of the invention as defined by the appended claims and their full scope of equivalents.

## Claims

1. A closure apparatus, comprising:
a first member having a first partially cylindrical segment dimensioned to fit around at least a portion of a transmission cable and at least one second partially cylindrical segment coupled to the first partially cylindrical segment and dimensioned to fit around at least a portion of a tether cable; and
a second member having a first partially cylindrical segment dimensioned to fit around at least a portion of a transmission cable and at least one second partially cylindrical segment dimensioned to fit around at least a portion of a tether cable,
wherein the first and second members are configured in such a way that, when joined together, the first and second members form a closure around the transmission cable and the at least one tether cable in such a way that the transmission cable and the at least one tether cable are substantially parallel and co-planar with respect to one another.

2. The apparatus as recited in claim 1, wherein the first member includes at least one first keying feature, wherein the second member includes at least one second keying feature, and wherein the first and second keying features are configured in such a way that the first and second members are joined together by joining together the first and second keying features.

3. The apparatus as recited in claim 2, wherein one of the first and second keying features further comprises at least one key protruding from a portion of the respective member, and wherein the other of the first and second keying features further comprises at least one keyway formed in a portion of the respective member, and wherein the first and second members are joined together by positioning the at least one key into the at least one keyway.

4. The apparatus as recited in claim 1, wherein the first member includes at least one flanged surface, wherein the second member includes at least one flanged surface, and wherein the first and second members are joined together by joining together the at least one flanged surface of the first member with the at least one flanged surface of the second member.

5. The apparatus as recited in claim 4, wherein the flanged surface of one of the first and second members includes at least one key protruding therefrom, wherein the flanged surface of the other of the first and second members includes at least one keyway formed therein, and wherein the first and second members are joined together by positioning the at least one key into the at least one keyway in such a way that the flanged surface of the first member and the flanged surface of the second member are joined together.

6. The apparatus as recited in claim 1, wherein at least a portion of at least one of the first and second members is made of at least one material selected from the group consisting of polycarbonate, nylon, die cast aluminum, precision formed aluminum, stamped aluminum and stainless steel.

7. A closure member apparatus, comprising:
a first partially cylindrical segment dimensioned to fit around at least a portion of a transmission cable;
at least one second partially cylindrical segment coupled to the first partially cylindrical segment and dimensioned to fit around at least a portion of a tether cable; and
at least one flanged surface coupled to at least one of the first partially cylindrical segment and the at least one second partially cylindrical segment,
wherein, when the flanged surface of the closure member apparatus is joined together with the flanged surface of another closure member apparatus, a closure having a first cylinder dimensioned to receive the transmission cable and at least one second cylinder dimensioned to receive the tether cable is formed in such a way that the transmission cable and the at least one tether cable are substantially parallel and co-planar with respect to one another.

8. The apparatus as recited in claim 7, wherein the at least one flanged surface includes at least one keying feature configured in such a way that, when the flanged surface of the closure member apparatus is joined together with the flanged surface of another closure member apparatus, the keying features of the respective closure member apparatus are joined together.

9. The apparatus as recited in claim 7, wherein the at least one flanged surface includes at least one key protruding therefrom and at least one keyway formed therein, wherein the at least one key and the at least one keyway are configured in such a way that, when the flanged surface of the closure member apparatus is joined together with the flanged surface of another closure member apparatus, the key of one of the closure member apparatus is positioned in the keyway of the other of the closure member apparatus.

10. The apparatus as recited in claim 7, wherein the first partially cylindrical segment includes a first side and a second side, and wherein the at least one second partially cylindrical segment further comprises a first second partially cylindrical segment coupled to the first side of the first partially cylindrical segment and a second partially cylindrical segment coupled to the second side of the first partially cylindrical segment.

11. The apparatus as recited in claim 7, wherein the closure member apparatus further comprises a first side and a second side, wherein the flanged surface further comprises a first flanged surface coupled to the first side of the closure member apparatus and a second flanged surface coupled to the second side of the closure member apparatus, and wherein the closure member apparatus is joined together with another closure member apparatus when the first flanged surface of one of the closure member apparatus is joined together with the second flanged surface of the other closure member apparatus.

12. The apparatus as recited in claim 11, wherein the closure member apparatus further comprises a first corner, a second corner, a third corner and a fourth corner, and wherein the closure member apparatus further comprises a pair of keying features protruding from one set of opposing corners and a pair of keyways formed in the other set of opposing corners.

13. The apparatus as recited in claim 1, wherein at least a portion of the closure member apparatus is made of at least one material selected from the group consisting of polycarbonate, nylon, die cast aluminum, precision formed aluminum, stamped aluminum and stainless steel.
